# DEMANDE DE BREVET EUROPEEN

(11) **EP 3 029 344 A1**
(43) Date de publication de la demande: **08.06.2016**
(21) Numéro de dépôt: 15197053.0
(22) Date de dépôt: 30.11.2015
(51) Int. Cl.: F16C 23/08, F16C 33/78, F16C 33/46

(54) **PIÈCE ET SYSTÈME D'ÉTANCHÉITÉ POUR ROULEMENTS, ET ROULEMENT MUNI DE TELS PIÈCES ET SYSTÈMES**

(30) Priorité: 01.12.2014 FR 1461741
(71) Demandeur: NTN-SNR Roulements, 74000 Annecy (FR)
(72) Inventeur: PASCHAL, Antoine, 30300 COMPS (FR); POLLIER, Vivien, 74370 PRINGY (FR)
(74) Mandataire: Derambure Conseil

(57) **Abrégé**

La pièce d'étanchéité pour roulement comprend un corps d'étanchéité (26) annulaire d'axe l'axe du roulement. Le corps d'étanchéité (26) comprend une portion radialement intérieure d'étanchéité (27) avec une première surface périphérique d'étanchéité (28) continue proche d'une surface complémentaire de la bague intérieure, et une portion radialement extérieure d'étanchéité (29) avec une deuxième surface périphérique d'étanchéité (30) continue proche d' une surface complémentaire de la bague extérieure,

La pièce d'étanchéité comprend au moins un organe de fixation (31) prévu sur le corps d'étanchéité (26) annulaire, et fixé mécaniquement à la cage en une région de bord périphérique radialement intérieure et extérieure de la cage.

## Description

L'invention concerne le domaine des roulements.

On connait de manière générale des roulements comprenant une bague intérieure et une bague extérieure définissant entre elles un espace intérieur annulaire, et des corps roulants disposés dans l'espace intérieur annulaire et retenus par une cage. Pour garantir le fonctionnement de tels roulements, on a recours à une pièce d'étanchéité rapportée directement ou indirectement sur une des bagues, et fermant l'espace intérieur annulaire au moins d'un côté. Une difficulté réside en ce que, en utilisation, l'une des bagues intérieure ou extérieure va tourner par rapport à l'autre. Aussi, pour garantir l'étanchéité, la pièce d'étanchéité doit garantir à la fois une étanchéité statique et une étanchéité dynamique.

La pièce d'étanchéité est soit une pièce sensiblement rigide, appelée également déflecteur, fermant quasiment en totalité l'espace intérieur annulaire, soit un joint comprenant un matériau déformable en contact glissant sur l'une des bagues pour empêcher au maximum l'accès à l'espace intérieur.

Un exemple d'un tel système est par exemple décrit dans WO2011/138,107 dans le cas d'un joint. Toutefois, la garantie d'une bonne étanchéité dynamique implique une forte proximité entre la surface périphérique d'étanchéité dynamique et la bague en regard, et limite par conséquent fortement le désalignement angulaire maximal entre les deux bagues. En cas de rotation rapide et/ou de léger désalignement, un frottement important va causer un couple résistant de forte intensité. Par ailleurs, la réalisation de l'étanchéité statique nécessite d'usiner un profil de fixation dans la bague concernée.

WO 2011/027,662 vise à réduire ces problèmes en proposant de coller un déflecteur sur la cage du roulement. Grace à ces dispositions, on n'a plus besoin d'usiner une des bagues pour la rétention de la pièce d'étanchéité, et on double le désalignement angulaire autorisé, celui-ci étant pris en charge sur les deux bords périphériques du déflecteur.

Par ailleurs, dans le cas particulier d'une cage massive, on connait le document JP 2007/198540. Dans ce document, on assemble une pièce d'étanchéité à la cage par vissage. Une telle solution n'est pas satisfaisante du point de vue industriel, car elle nécessite un nombre de composants important.

Ainsi, un problème posé est de simplifier la mise en oeuvre de la solution d'étanchéité.

FR 2 776 725 décrit un exemple de réalisation d'une pièce d'étanchéité assemblée sur une cage. Toutefois, dans ce document, le positionnement précis de la cage dans le roulement n'est pas garanti. Ceci a un impact direct sur l'étanchéité, car en cas de jeu de la cage par rapport aux bagues, le contact entre le joint et la bague pourrait être perdu, ce qui influerait temporairement sur l'étanchéité, et/ou le joint pourrait être détérioré, ce qui influerait définitivement sur l'étanchéité. Une même remarque peut être faite à propos de DE 83 333 75 U. On cherche donc une solution d'étanchéité fiable.

Ci-après, un exposé de l'invention.

Selon un aspect, l'invention a pour objet un roulement comprenant une bague intérieure et une bague extérieure définissant entre elles un espace intérieur annulaire.

La bague intérieure définit un axe de roulement, et comprend une surface périphérique de guidage tournée radialement vers l'extérieur.

Le roulement comprend des corps roulants disposés dans l'espace intérieur annulaire, et un système d'étanchéité.

Le roulement comprend une cage retenant les corps roulants, et comprenant au moins une couronne latérale annulaire comportant une région de bord périphérique radialement extérieure et une région de bord périphérique radialement intérieure comprenant une face tournée radialement vers l'intérieur, faisant face à la surface périphérique de guidage tournée radialement vers l'extérieur de la bague intérieure, de manière à assurer un guidage de la cage par rapport à la bague intérieure en rotation autour de l'axe de roulement.

La cage comprend également au moins un motif de fixation disposé en l'une des régions de bord périphériques radialement intérieure et extérieure.

Le roulement comprend également une pièce d'étanchéité.

La pièce d'étanchéité comprend un corps d'étanchéité annulaire d'axe l'axe de roulement.

Le corps d'étanchéité comprend une portion radialement intérieure d'étanchéité comprenant une première surface périphérique d'étanchéité continue proche d'une surface complémentaire de la bague intérieure, et une portion radialement extérieure d'étanchéité comprenant une deuxième surface périphérique d'étanchéité continue proche d'une surface complémentaire de la bague extérieure.

La pièce d'étanchéité comprend au moins un organe de fixation prévu sur le corps d'étanchéité annulaire, et fixé mécaniquement au motif de fixation de la cage.

Par fixation mécanique, on comprend toute interaction entre deux pièces par coopération de forme, faisant intervenir des efforts à l'échelle macroscopique, à l'opposé d'une fixation chimique, où l'interaction a lieu à l'échelle moléculaire.

L'organe de fixation s'étend au moins partiellement dans une région dédiée de l'espace intérieur annulaire.

En prévoyant un organe de fixation de la pièce d'étanchéité à fixer mécaniquement à la cage, on s'affranchit des contraintes liées au collage, qui nécessite pour la pièce d'étanchéité d'être réalisée dans un matériau aux caractéristiques proches de celles du matériau de la cage, et dont la fiabilité dans le temps dans des conditions adverses est parfois difficilement maitrisée. Ainsi, on n'est plus limité à un déflecteur, et on ouvre le champ des réalisations possibles de la pièce d'étanchéité. Par ailleurs, la fixation peut être réalisée simplement par un simple mouvement relatif d'assemblage de la pièce d'étanchéité et de la cage l'une en direction de l'autre.

En définissant précisément la position de la cage par rapport à la bague intérieure, on définit précisément la position de la pièce d'étanchéité portée par celle-ci par rapport à la bague intérieure. Ceci permet de définir au mieux la solution d'étanchéité.

Selon une réalisation, l'organe de fixation de la pièce d'étanchéité comprend une saillie projetant du corps d'étanchéité selon l'axe de roulement.

Selon une réalisation, l'organe de fixation de la pièce d'étanchéité est un organe de fixation à déformation élastique destiné à être fixé à la cage par déformation élastique, dans lequel l'organe de fixation comprend une base, et un ergot de fixation lié élastiquement à la base.

Selon une réalisation, l'ergot de fixation comprend une surface de rétention normale à un axe longitudinal de la partie déformable élastiquement.

Selon une réalisation, l'organe de fixation comprend une partie déformable élastiquement par rapport à la base et dans laquelle l'ergot de fixation est porté par la partie déformable élastiquement.

Selon une réalisation, au moins les portions radialement intérieure et extérieure d'étanchéité du corps d'étanchéité de la pièce d'étanchéité sont en matériau élastomère.

Selon une réalisation, la pièce d'étanchéité présente un organe support, et dans lequel un corps élastomère de la pièce d'étanchéité comprenant un joint d'étanchéité est surmoulé sur l'organe support, le corps élastomère et l'organe support ensemble formant le corps d'étanchéité.

Selon une réalisation, l'organe de fixation s'étend de l'organe support.

Selon une réalisation, l'organe support comprend une couronne annulaire comprenant un pourtour radialement intérieur et un pourtour radialement extérieur tous deux compris entre les première et deuxième surfaces d'étanchéité.

Selon une réalisation, la première surface périphérique d'étanchéité et/ou la deuxième surface périphérique d'étanchéité de la pièce d'étanchéité comprend au moins une lèvre en regard de la surface complémentaire associée.

Selon une réalisation, la région dédiée accueillant la portion de l'organe de fixation s'étend entre deux corps roulants adjacents.

Selon une réalisation, la cage comprend des ponts s'étendant d'une couronne latérale annulaire à l'autre, la région dédiée accueillant la portion de l'organe de fixation s'étend entre deux ponts adjacents.

On décrit maintenant brièvement les figures des dessins.

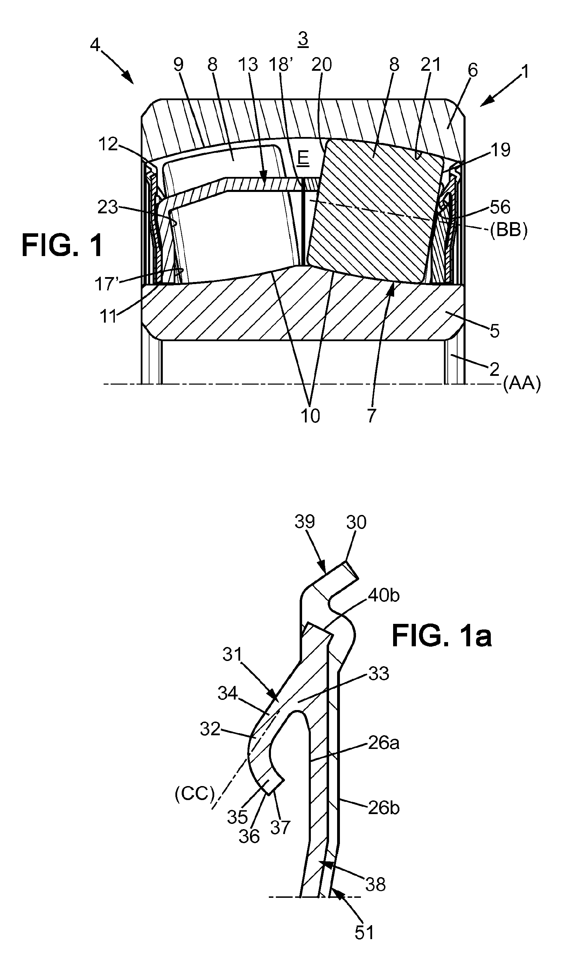

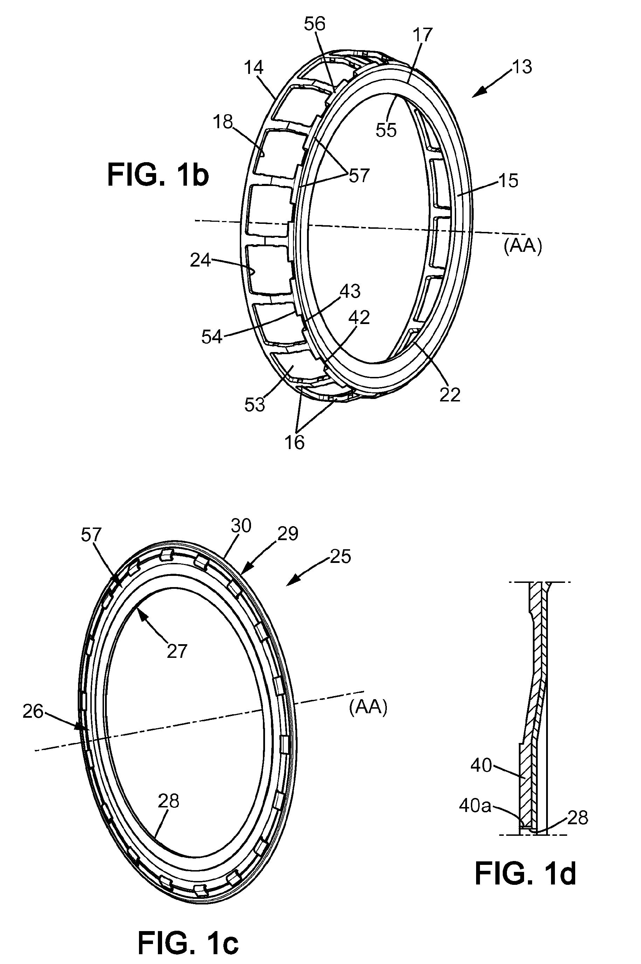

La figure 1 est un schéma correspondant à une coupe transversale d'une partie d'un roulement dans un plan contenant l'axe du roulement, selon un premier mode de réalisation,
Les figures 1a et 1d sont des agrandissements de parties de la figure 1,
Les figures 1a et 1b sont des vues en perspective de la cage et de la pièce d'étanchéité de la figure 1,
La figure 2 est une vue similaire à la figure 1 pour un deuxième mode de réalisation,
La figure 2a est un agrandissement d'une partie de la figure 2,
Les figures 2b et 2c sont des vues en perspective similaires aux figures 1b et 1c, respectivement, de la cage et de la pièce d'étanchéité de la figure 2.

Ci-après un exposé détaillé de plusieurs modes de réalisation de l'invention assorti d'exemples et de référence aux dessins.

Un système tournant 1 comprend classiquement un arbre 2 s'étendant axialement selon un axe AA, et un boîtier extérieur 3 recevant l'arbre 2. Le système tournant est assemblé de sorte à permettre un mouvement relatif de rotation de l'arbre 2 et du boîtier extérieur 3 autour de l'axe AA de l'arbre. Un tel mouvement relatif de rotation peut par exemple être la rotation de l'arbre 2 autour de son axe AA par rapport au boîtier extérieur 3 fixe, ou un mouvement de rotation du boîtier extérieur 3 autour de l'arbre 2 fixe. Pour fixer les idées, on se référera par la suite au premier de ces deux cas, étant entendu que l'invention s'applique aussi bien à l'autre cas.

Par exemple, l'arbre 2 est un essieu ou une partie d'un essieu, et le boitier extérieur 3 est un carter d'essieu. Toutefois, de nombreuses autres applications sont possibles.

Le terme « axial » se réfère à ce qui s'étend selon l'axe AA. Le terme « radial » se réfère conventionnellement à ce qui s'étend depuis l'axe AA en étant perpendiculaire à l'axe AA.

Le système tournant 1 peut également comporter un roulement 4. Le roulement 4 est interposé entre l'arbre 2 et le boîtier extérieur 3. Le roulement 4, d'axe AA, comprend une bague intérieure 5, une bague extérieure 6 et, dans un espace E entre les deux bagues 5 et 6, un agencement à corps roulants 7 incluant des corps roulants 8.

Les termes « intérieur » ou « interne » se rapportent à ce qui se trouve proche du centre du roulement, axialement ou radialement, et les termes « extérieur » ou « externe » se rapportent à ce qui se trouve éloigné du centre du roulement.

La bague extérieure 6 est par exemple formée d'une pièce monobloc en acier et comporte un chemin de roulement 9 unique sphérique, c'est-à-dire dont la surface se trouve sur une sphère centrée au centre de symétrie de la bague. La bague intérieure 5 peut également être monobloc et comporte deux chemins de roulement 10 faisant face au chemin de roulement 9 de la bague extérieure 2.

Chacun de ces deux chemins de roulement 10 forme une surface de révolution dont la génératrice dans le plan de la figure 1 est un arc de cercle ayant un rayon égal au rayon de courbure du chemin de roulement 9 de la bague extérieure 6.

La bague intérieure 5 comporte en outre, à chaque extrémité axiale, un rebord 11 tourné radialement vers la bague extérieure 6 et prolongeant le chemin de roulement 10.

La bague extérieure 6 comporte en outre, à chaque extrémité axiale, un rebord 12 tourné radialement vers la bague intérieure 5 et prolongeant le chemin de roulement 9.

La bague intérieure 5 est montée rigidement calée sur l'arbre 2 et/ou la bague extérieure 6 est montée rigidement calée dans le boîtier extérieur 3.

Selon les réalisations, l'agencement à corps roulants 7 comporte soit une seule rangée de N corps roulants 8, soit deux rangées de corps roulants 8, comme représenté. Par la suite, on fera référence à ce dernier mode de réalisation. Les corps roulants 8 d'une même rangée sont maintenus par une cage 13. Les corps roulants sont par exemple des tonneaux d'axe BB.

Les bagues 5 et 6 et l'agencement à corps roulants 7, et par voie de conséquence le roulement 4, peuvent faire l'objet de différentes variantes de réalisation.

Les deux cages 13 peuvent être réalisées identiques. Elles peuvent être notamment fabriquées en tôle métallique, formées par un procédé d'emboutissage. Dans le présent exemple de réalisation, elles sont disposées symétriques l'une par rapport à l'autre par rapport à un plan normal à l'axe du roulement 1. Les cages sont indépendantes en rotation l'une par rapport à l'autre. Elles sont représentées décalées angulairement l'une par rapport à l'autre autour de l'axe AA d'un écart angulaire correspondant à la moitié de la plage angulaire associée à un corps roulant 8. Mais cela peut être autrement. Rien ne maintient un tel décalage angulaire.

Chaque cage 13 définit un axe de révolution confondu avec l'axe de révolution de la bague intérieure 5, et comporte une première couronne latérale annulaire 14 axialement intérieure, une deuxième couronne latérale annulaire 15 axialement extérieure, et des ponts 16 s'étendant d'une couronne latérale annulaire 14, 15 à l'autre 15, 14. Les termes 'axialement intérieure' et 'axialement extérieure' sont ici purement illustratifs, et font référence à la position des couronnes latérales annulaires le long de l'axe AA, par rapport à une région centrale du roulement.

La première couronne latérale annulaire 14 a une face périphérique axialement extérieure 18 et une face périphérique axialement intérieure 18' opposée.

La deuxième couronne latérale annulaire 15 axialement extérieure a une face périphérique axialement extérieure 17 et une face périphérique axialement intérieure 17' opposée. Elle comporte également une face 22 radialement tournée vers l'intérieur et une face 56 radialement tournée vers l'extérieur opposée. La deuxième couronne latérale annulaire 15 comporte une portion de bord périphérique radialement externe 54 et une portion de bord périphérique radialement interne 55 opposée. La portion de bord périphérique radialement interne 55 comporte la face 22 cylindrique. La portion de bord périphérique radialement externe 54 comporte la face 56.

Les ponts 16 sont obtenus par découpe de fenêtres dans la tôle formant la cage 13, ces fenêtres (ou espaces ouverts) formant des alvéoles 53 dans lesquelles sont logés les corps roulants 8. Les ponts 16 sont notamment raccordés directement à la face axialement extérieure 18 de la première couronne latérale annulaire 14 d'une part, et à la face 56 radialement tournée vers l'extérieur de la deuxième couronne latérale annulaire 15 d'autre part.

La face 56 présente une géométrie crénelée, comme cela sera décrit plus en détail ci-après. En particulier, on ménage un évidement 43 au niveau de chaque alvéole, entre deux pieds de pont successifs. L'évidement 43 est notamment sensiblement aligné avec l'axe central de chaque alvéole s'étendant entre les deux couronnes. Au niveau de l'évidement 43, la face 56 est inclinée par rapport à l'axe AA, par exemple d'un angle compris entre 15° et 75°, notamment entre 35° et 55°.

Les corps roulants 8 sont conformés en tonneaux d'axe BB, avec deux faces planes d'extrémité 19, 20 et une surface de roulement convexe 21 engendrée par une génératrice constituée par un arc de cercle de rayon analogue au rayon de courbure du chemin de roulement sphérique 9, 10.

Cette description est faite pour ce mode de réalisation, mais on pourra en variante prévoir d'autres types de corps roulants, tel qu'en particulier des cylindres ou troncs de cônes évasés. Ainsi, selon les réalisations, l'axe BB d'un corps roulant 8 est parallèle ou incliné par rapport à l'axe AA du roulement 4.

La deuxième couronne latérale annulaire 15 assure un guidage de la cage 13 par rapport à la bague intérieure 5. La face cylindrique 22 tournée vers l'intérieur est cylindrique de révolution et fait face au rebord 11 de la bague intérieure 5, à faible distance de celui-ci, de manière à assurer un guidage de la cage 13 par rapport à la bague intérieure 5. Ainsi, en fonctionnement, la cage 13 est centrée sur la bague intérieure 5, par coopération mécanique de portions rigides entre elles, de sorte que sa position est à tout moment précisément définie.

La deuxième couronne latérale annulaire 15 forme, au niveau des alvéoles, des facettes de contact 23 essentiellement perpendiculaires à l'axe de rotation des corps roulants 8, assurant un guidage des faces planes d'extrémité 19 des corps roulants 8.

De même, la première couronne latérale annulaire 14 forme au niveau des alvéoles des facettes de contact 24 essentiellement perpendiculaires à l'axe de rotation des corps roulants 8, assurant un guidage des faces planes d'extrémité 20 des corps roulants 8.

On prévoit une pièce d'étanchéité 25 à chaque extrémité axiale du roulement 4. Pour simplifier, une seule pièce d'étanchéité 25 va être décrite, étant entendu que l'autre pièce d'étanchéité peut être réalisée identique ou similaire, symétrique de la première par rapport à un plan normal à l'axe AA.

En variante, on pourrait utiliser une seule pièce d'étanchéité 25 telle que celle décrite par la suite en une extrémité axiale, et toute autre solution d'étanchéité pour l'autre extrémité axiale.

La pièce d'étanchéité 25 comprend un corps d'étanchéité 26 annulaire d'axe AA. Le corps d'étanchéité 26 comprend une portion radialement intérieure d'étanchéité 27 comprenant une première surface périphérique d'étanchéité 28 continue en contact périphérique continu glissant avec le rebord 11 de la bague intérieure 5, qui forme une surface complémentaire de la bague intérieure. Le corps d'étanchéité 26 comprend une portion radialement extérieure d'étanchéité 29 comprenant une deuxième surface périphérique d'étanchéité 30 continue en contact périphérique continu glissant avec le rebord 12 de la bague extérieure 6, qui forme une surface complémentaire de la bague extérieure.

Le cas échéant, on remplace la première surface périphérique d'étanchéité 28 continue en contact périphérique continu glissant avec le rebord 11 de la bague intérieure 5 par une première surface périphérique d'étanchéité continue en regard à faible distance du rebord 11 de la bague intérieure 5.

Le cas échéant, on remplace la deuxième surface périphérique d'étanchéité 30 continue en contact périphérique continu glissant avec le rebord 12 de la bague extérieure 6 par une deuxième surface périphérique d'étanchéité continue en regard à faible distance du rebord 12 de la bague extérieure 5.

Que ce soit en contact glissant ou en regard de (selon le degré d'étanchéité désiré pour l'application), la surface périphérique d'étanchéité est proche du rebord correspondant pour empêcher l'entrée dans le roulement de particules dont la taille dépend de l'application.

La pièce d'étanchéité 25 comprend au moins un organe de fixation 31 prévu sur le corps d'étanchéité 26 annulaire, et fixé mécaniquement à la cage 13. Dans l'exemple présenté, le corps d'étanchéité 26 comprend un organe de fixation 31 par alvéole 53. Les organes de fixation 31 sont équi-répartis selon la circonférence de la pièce d'étanchéité 25. En variante, on pourra utiliser moins d'organes de fixation 31, par exemple un pour chaque paire d'alvéole. Utiliser un nombre équi-réparti d'organes de fixation, qui plus est identique au nombre d'alvéoles, est considéré comme avantageux pour l'équilibre du roulement, et par conséquent sa durée de vie. Réduire le nombre d'organes de fixation peut être avantageux d'un point de vue économique, pour des applications où la durée de vie n'est pas le critère principal.
Ci-après, on décrit un exemple d'organe de fixation 31, sachant que tous les organes de fixation peuvent être réalisés identiques.

Le corps d'étanchéité 26 comprend une face axialement interne 26a tournée vers la cage 13, et une face axialement externe 26b, tournée vers l'extérieur, opposée à la face axialement interne 26a.

L'organe de fixation 31 comprend une saillie 32 projetant de la face axialement interne 26a du corps d'étanchéité. Dans ce mode de réalisation, la saillie 32 est disposée dans une portion radialement extérieure 57 du corps d'étanchéité. Elle s'étend depuis la face axialement interne 26a à la fois axialement vers l'intérieur selon l'axe de roulement et radialement vers l'intérieur. La saillie 32 présente une portée angulaire de l'ordre d'une fraction de la portée angulaire d'une alvéole, par exemple entre un quart et trois quart de la portée angulaire de l'alvéole.
L'organe de fixation 31 est un organe de fixation à déformation élastique fixé à la cage 13 par déformation élastique. Dans le présent exemple, on a par exemple recours à un système clipsable.

En particulier, l'organe de fixation 31 comprend une base 33, une partie déformable élastiquement 34 par rapport à la base 33, et un ergot de fixation 35 porté par la partie déformable élastiquement 34. La partie déformable élastiquement 34 s'étend selon un axe CC s'étendant sensiblement axialement vers l'intérieur et radialement vers le centre , et peut fléchir par rapport à cet axe. L'ergot 35 forme un angle sensiblement droit avec la partie déformable élastiquement 34 (moyennant la courbure entre l'ergot 35 et la partie déformable élastiquement 34 nécessaire au procédé de fabrication). C'est-à-dire qu'il s'étend sensiblement axialement vers l'extérieur et radialement vers le centre du roulement. L'ergot 35 comporte une surface d'actionnement 36, sous forme de rampe inclinée par rapport à l'axe AA, et une surface de rétention 37 inclinée par rapport à l'axe AA, et sensiblement normale à la face 56 au niveau de l'évidement 43.

La pièce d'étanchéité 25 présente un organe support 38 duquel s'étend l'organe de fixation 31. Un corps élastomère 51 est surmoulé sur l'organe support 38. Le corps élastomère 51 comprend un joint d'étanchéité 39. L'organe support 38 et l'organe de fixation 31 sont réalisés sous la forme d'un composant unique, par exemple réalisé en plastique par moulage. Le joint d'étanchéité 39 comporte les première et deuxième surfaces d'étanchéité 28 et 30. Les portions radialement intérieure et extérieure d'étanchéité du corps d'étanchéité sont en matériau élastomère. L'organe support 38 comprend une couronne annulaire 40 comprenant un pourtour radialement intérieur 40a et un pourtour radialement extérieur 40b tous deux compris entre les première et deuxième surfaces d'étanchéité 29 et 30.

En variante, on pourrait avoir recours à deux surmoulages distincts, l'un du pourtour radialement intérieur 40a, l'autre du pourtour radialement extérieur 40b. Les deux parties surmoulées ne sont pas nécessairement liées ou en contact.

Dans l'exemple présenté, la deuxième surface périphérique d'étanchéité 30 comprend une lèvre 41. En variante, la deuxième surface périphérique d'étanchéité 30 pourrait comprendre plusieurs lèvres espacées axialement. La lèvre 41 est en regard de la surface complémentaire associée.

Pour chaque organe de fixation 31, la cage 13 présente un motif de fixation 42 complémentaire de l'organe de fixation 31. Le motif de fixation est de géométrie adapté à la rétention de la pièce d'étanchéité 25 sur la cage 13. Pour l'exemple présenté ici, on a par exemple recours, à titre de motif de fixation 42, à un évidement 43 formé dans la région de bord périphérique extérieur 54 de la cage, Les évidements 43 sont ménagés dans la deuxième couronne latérale annulaire axialement extérieure 15.

Pour assembler la pièce d'étanchéité 25 à la cage 13, on déplace la pièce d'étanchéité 25 relativement à la cage 13 selon l'axe AA, en prenant soin de faire correspondre les organes de fixation 31 aux motifs de fixation 42 de la cage. Lors de la poursuite de ce déplacement, la surface d'actionnement 36, sous forme de rampe, coopère avec la face extérieure17 au niveau de l'évidement 43, et défléchit la partie déformable élastiquement 34. Une fois que l'ergot 35 a traversé l'évidement 43, la partie déformable élastiquement 34 est libre de reprendre sa position de repos, dans laquelle la surface de rétention 37 de l'ergot 35 coopère avec la face 56 de la cage 13 orientée en biais par rapport à la direction d'insertion, et empêche un déplacement dans le sens opposé de la pièce d'étanchéité 25 par rapport à la cage 13. Le déplacement axialement vers l'intérieur est, lui, empêché par butée de la surface axialement intérieure 26a de la pièce d'étanchéité 25 sur la surface 17 extérieure de la cage 13. Cette butée se fait par exemple au niveau du bord périphérique radialement interne 55, comme visible sur la figure 1. La cage 13 assemblée à la pièce d'étanchéité 25 forment ensemble un système d'étanchéité.

Dans cette position assemblée, si la cage 13 est en place dans le roulement 4, les première 28 et deuxième 30 surfaces d'étanchéité sont en contact étanche avec les rebords 11, 12, respectifs, des bagues interne 5 et externe 6.

L'organe de fixation s'étend au moins partiellement dans une région dédiée de l'espace intérieur annulaire. Notamment, il s'étend principalement dans le volume parcouru par les corps roulants en fonctionnement du roulement. Ainsi, on conserve une réalisation compacte.

Lorsque le roulement 4 va fonctionner, les bagues intérieure et extérieure vont tourner l'une par rapport à l'autre autour de l'axe AA selon une vitesse de rotation relative v. L'assemblage de la cage 13 et de la pièce d'étanchéité 25 va tourner autour de l'axe AA à une vitesse de rotation sensiblement de l'ordre de v/2. Il en résulte un contact périphérique continu glissant entre la première surface périphérique d'étanchéité 28 et le rebord 11 de la bague intérieure 5, et un contact périphérique continu glissant entre la deuxième surface périphérique d'étanchéité 30 et le rebord 12 de la bague extérieure 6. La vitesse de ces deux contacts étant réduite, l'étanchéité y est bien assurée.

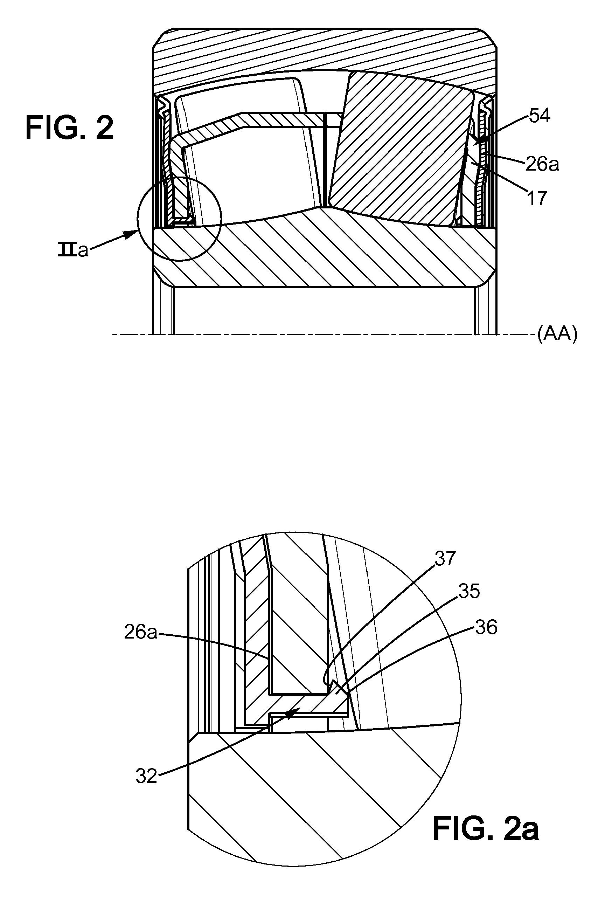

Les figures 2a à 2c représentent un deuxième mode de réalisation de l'invention. Dans cette variante de réalisation, on retrouve une partie des caractéristiques du premier mode de réalisation. Une différence tient en l'emplacement des saillies 32, qui sont ici disposées de manière à coopérer avec le bord périphérique radialement interne 55 de la cage.
Notamment, dans ce mode de réalisation, le bord périphérique radialement interne 55 de la cage comporte une surface 22 tournée vers l'intérieur présentant une géométrie crénelée : une portion d'enveloppe cylindrique la plus radialement intérieure définit le guidage de la cage par rapport à la bague intérieure en rotation autour de l'axe de roulement. Pour chaque alvéole, un évidement 43 est proposé pour coopérer avec la saillie 32. Ainsi, la saillie 32 s'étend depuis la portion périphérique radialement intérieure de la pièce d'étanchéité 25. De plus, la géométrie de la pièce d'étanchéité 25 est adaptée. Elle s'étend depuis la face axialement interne 26a axialement vers l'intérieur selon l'axe de roulement. L'ergot 35 projette surtout radialement vers l'extérieur par rapport à la partie déformable élastiquement 34. Les saillies 32 vont par exemple être fournies entre deux corps roulants successifs.

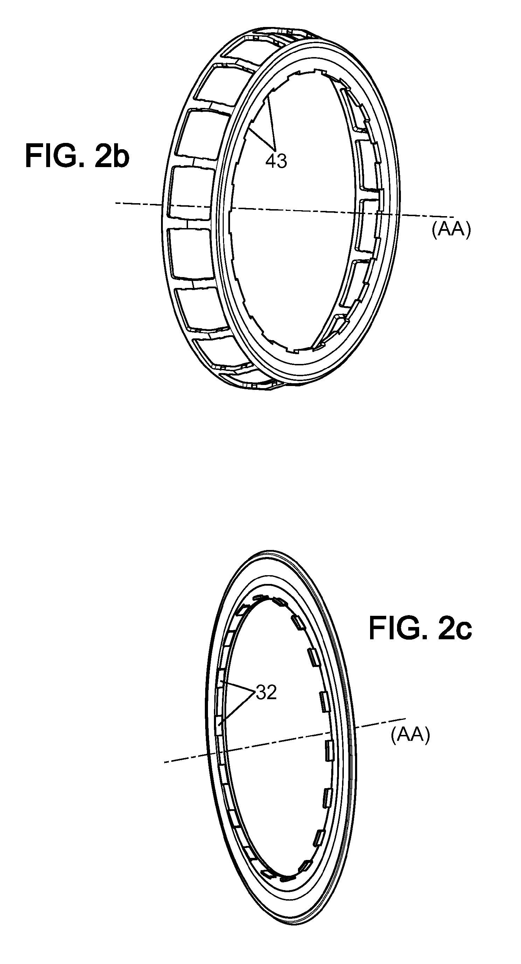

Le déplacement axialement vers l'intérieur est, empêché par butée de la surface axialement intérieure 26a de la pièce d'étanchéité 25 sur la surface 17 extérieure de la cage 13. Cette butée se fait par exemple au niveau du bord périphérique radialement externe 54, comme visible sur la figure 2.

## Revendications

1. Roulement comprenant :
- une bague intérieure (5), définissant un axe de roulement, comprenant une surface périphérique de guidage (11) tournée radialement vers l'extérieur,
- une bague extérieure (6), la bague intérieure et la bague extérieure définissant entre elles un espace intérieur (E) annulaire,
- des corps roulants (8) disposés dans l'espace intérieur annulaire (E),
- une cage (13) retenant les corps roulants, et comprenant au moins une couronne latérale annulaire (15) comportant une région de bord périphérique radialement extérieure et une région de bord périphérique radialement intérieure comprenant une face tournée radialement vers l'intérieur (22) faisant face à la surface périphérique de guidage (11) de la bague intérieure (5) de manière à assurer un guidage de la cage par rapport à la bague intérieure (5) en rotation autour de l'axe de roulement, la cage comprenant un motif de fixation (42) disposé en l'une des régions de bord périphériques radialement intérieure et extérieure,
- une pièce d'étanchéité comprenant un corps d'étanchéité (26) annulaire d'axe l'axe du roulement, le corps d'étanchéité (26) comprenant une portion radialement intérieure d'étanchéité (27) comprenant une première surface périphérique d'étanchéité (28) continue proche d'une surface complémentaire de la bague intérieure, et une portion radialement extérieure d'étanchéité (29) comprenant une deuxième surface périphérique d'étanchéité (30) proche d'une surface complémentaire de la bague extérieure,
la pièce d'étanchéité comprend au moins un organe de fixation (31) prévu sur le corps d'étanchéité (26) annulaire, et fixé mécaniquement au motif de fixation (42) de la cage,
l'organe de fixation (31) s'étendant au moins partiellement dans une région dédiée de l'espace intérieur annulaire (E).

2. Roulement selon la revendication 1, dans lequel l'organe de fixation (31) de la pièce d'étanchéité comprend une saillie (32) projetant du corps d'étanchéité (26) selon l'axe de roulement.

3. Roulement selon l'une des revendications 1 à 2, dans lequel l'organe de fixation (31) de la pièce d'étanchéité est un organe de fixation à déformation élastique destiné à être fixé à la cage par déformation élastique, dans lequel l'organe de fixation (31) comprend une base (33), et un ergot de fixation (35) lié élastiquement à la base (33).

4. Roulement selon la revendication 3, dans lequel l'ergot de fixation (35) comprend une surface de rétention (37) normale à un axe longitudinal de la partie déformable élastiquement.

5. Roulement selon l'une des revendications 3 ou 4, dans lequel l'organe de fixation (31) comprend une partie déformable élastiquement (34) par rapport à la base (33), et dans laquelle l'ergot de fixation (35) est porté par la partie déformable élastiquement (34).

6. Roulement selon l'une des revendications 1 à 5, dans lequel au moins les portions radialement intérieure et extérieure d'étanchéité (27,29) du corps d'étanchéité (26) de la pièce d'étanchéité sont en matériau élastomère.

7. Roulement selon l'une des revendications 1 à 6, dans lequel la pièce d'étanchéité présente un organe support (38), et dans lequel un corps élastomère (51) de la pièce d'étanchéité comprenant un joint d'étanchéité (39) est surmoulé sur l'organe support (38), le corps élastomère (51) et l'organe support (38) ensemble formant le corps d'étanchéité (26).

8. Roulement selon la revendication 7, dans lequel l'organe de fixation (31) s'étend de l'organe support (38).

9. Roulement selon l'une des revendications 7 à 8, dans lequel l'organe support (38) comprend une couronne annulaire (40) comprenant un pourtour radialement intérieur (40b) et un pourtour radialement extérieur (40a) tous deux compris entre les première et deuxième surfaces d'étanchéité (28,30).

10. Roulement selon l'une des revendications 1 à 9, dans lequel la première surface périphérique d'étanchéité (28) et/ou la deuxième surface périphérique d'étanchéité (30) de la pièce d'étanchéité comprend au moins une lèvre (41) en regard de la surface complémentaire associée.

11. Roulement selon l'une quelconque des revendications 1 à 10, dans lequel la région dédiée accueillant la portion de l'organe de fixation s'étend entre deux corps roulants (8) adjacents.

12. Roulement selon l'une quelconque des revendications 1 à 10, dans lequel la cage comprend des ponts (16) s'étendant d'une couronne latérale annulaire (14, 15) à l'autre (15, 14), la région dédiée accueillant la portion de l'organe de fixation s'étend entre deux ponts (16) adjacents.
